# EUROPÄISCHE PATENTSCHRIFT

(11) **EP 2 400 609 B1**
(45) Veröffentlichungstag und Bekanntmachung des Hinweises auf die Patenterteilung: **28.10.2020**
(21) Anmeldenummer: 11170227.0
(22) Anmeldetag: 16.06.2011
(51) Int. Cl.: F21K 99/00, H01H 13/02, H02B 1/04

(54) **Umgebungslichtsensor in modularem Aufbau**
Ambient light sensor with modular structure
Capteur de lumière d'ambiance dans une configuration modulaire

(30) Priorität: 26.06.2010 DE 102010025242
(43) Veröffentlichungstag der Anmeldung: 28.12.2011
(73) Patentinhaber: Eaton Industries GmbH, 53115 Bonn (DE)
(72) Erfinder: Freyermuth, Thomas, 53505 Kalenborn (DE); Arndt, Karl-Heinz, 53859 Niederkassel (DE); Raetz, Reinhard, 53859 Niederkassel (DE)
(74) Vertreter: Leadbetter, Benedict

(56) Entgegenhaltungen:
- WO-A1-2010/048992
- DE-U1- 29 504 491
- DE-U1-202005 006 549
- US-A1- 2007 227 867

## Beschreibung

Die Erfindung betrifft ein System von modular aufgebauten Anzeige- und Meldegeräte.

Bekannt ist ein System zur Verdrahtung und Vernetzung von elektromechanischen Geräten, insbesondere von Meldegeräten (DE 29508773 U1). Das System umfasst mindestens ein Gerät oder ein Funktionsbaustein zum Einsetzen auf einer Schalttafel oder in einem Schaltschrank und einen Adapter zur Befestigung auf einer Busleitung, wobei das Gerät oder der Funktionsbaustein auf seiner Rückseite Steckanschlüsse und auf seiner Vorderseite Funktionselemente (zur Bedienung und/oder Anzeige) aufweist. Ein solches elektromechanisches Gerät kann weiterhin Rastelemente (Rasthaken) aufweisen zum vorderseitigen oder rückseitigen Aufrasten. Das Dokument WO 2010/048992 offenbart ein Sensorelement mit einem Lichtsensor, das zusammen mit weiteren Komponenten an ein Bussystem angeschlossen ist.

Die Erfindung geht aus von einem modular aufgebauten System aus Anzeige- und Meldegeräten zur Vernetzung und Signalisierung mit solchen gemeinsam an eine Bus- und Versorgungsleitung aufgeschalteten Geräten. Dieser Stand der Technik findet sich in: "Produktinformation - Smartwire-Darwin" - W0211-7601de ip/DFS 08/09 (2009) als download unter www.moeller.net.

Bisher sind Befehls- und Meldegeräte mit Leuchtmitteln ausgestattet, die eine maximale Helligkeit liefern, um Meldungen bei schwachem Licht oder bei Kunstlicht gut erkennbar machen. Als 'Nachfolger' kleiner Glühlampen mit beschränkter Leistung, deren Verlustleistung in den Bauraum noch abgeführt werden konnte, werden heute LEDs, bzw. Leistungs-LEDs mit erhöhter Lichtleistung eingesetzt. Gerade bei Anwendungen in geringer Umgebungshelligkeit kann dies zum Problem der Überstrahlung (Blendung) führen. Befehls- und Meldegeräte und Leuchtmittel werden mit einer einheitlichen Versorgungsspannung gespeist. Um den Wunsch nachzukommen, die Lichtleistung von Leuchtmitteln in Meldegeräten variabel zu gestalten, wäre die Einspeisung unterschiedlicher Spannungen nötig. Dabei können Funktionsprobleme auf der Busleitung entstehen, weil eine zentrale Steuerung von vornherein nicht dafür ausgelegt ist, Signale unterschiedlicher Spannungen zu verarbeiten. Mit solchen Einriffen in die Gerätekonstruktion entsteht erhöhter Material- und Arbeitsaufwand und höhere Kosten. Weiterhin nicht zu vergessen, dass durch Einsatz unterschiedlicher Netzteile, die Energieeffizienz abnimmt.

Es ist die Aufgabe der Erfindung, in einem modularen Aufbau von an eine Bus- und Versorgungsleitung aufgeschalteten Anzeige- und Meldegeräten, die gemeinsam vernetzt sind, eine Maßnahme zu schaffen, um die Helligkeit der Anzeigeelemente an den aufgeschalteten Anzeigeräten in Abhängigkeit vom Umgebungslicht veränderbar zu gestalten.

Die Lösung der Aufgabe findet sich in den Merkmalen des Hauptanspruchs. Weiterführende und vorteilhafte Ausgestaltungen sind in Unteransprüchen formuliert.

Die vorgeschlagene Lösung besteht in einem Umgebungslichtsensor in modularem Aufbau zur Vernetzung und Signalisierung mit gemeinsam an eine Bus- und Versorgungsleitung aufgeschalteten Anzeige- und Meldegeräten. Der Umgebungslichtsensor mit Isolierstoff-Gehäuse umfasst dabei:
- ein auf einer Vorderseite des Isolierstoff-Gehäuses und in einer Gehäuseöffnung angeordnetes Lichtsensor-Element,
- Kontaktmittel zum Kontaktieren mit der Bus- und Versorgungsleitung auf einer Gehäuse-Rückseite des Umgebungslichtsensors, und
- ein im Gehäuse des Umgebungslichtsensors gelagerter Elektronik-Baustein zur Buskommunikation über eine zentrale Bus-Steuerung mit aufgeschalteten Anzeige- und Meldegeräten,
wobei der Elektronik-Baustein und die zentrale Bus-Steuerung derart programmiert sind, dass in Abhängigkeit von der Umgebungshelligkeit von der zentralen Bus-Steuerung die Lichtleistung von optischen Anzeigemitteln mehrerer an der Bus- und Versorgungsleitung aufgeschalteter Anzeige- oder Meldegeräte gleichsinnig veränderbar ist.

Die Erfindung wird in einem System von modular aufgebauten Meldegeräten zur Vernetzung und Signalisierung mit gemeinsam an eine Bus- und Versorgungsleitung, insbesondere mit einer Spannungsversorgung von 16 oder 24 V aufgeschalteten Befehls- und Meldegeräten umgesetzt.

Das Sensor-Element (Fotodiode, Fotoelement) des Umgebungslichtsensors sollte eine breite spektrale Empfindlichkeit haben, etwa angepasst an die Empfindlichkeit des menschlichen Auges. Innerhalb eines Bereichs zwischen 0,1 lux und 100 klux lassen sich Sensor-Element finden, die eine lineare Kennlinie haben.

Der Einsatz eines Helligkeitssensors hat den Vorteil, dass bei Änderung der Umgebungshelligkeit die Lichtleistung von an der Bus- und Versorgungsleitung angeschalteten Anzeige- und Meldegeräten insgesamt oder in Gruppen ebenfalls abgeändert werden können. Vorzugsweise kann dieser Vorgang automatisch erfolgen.

Durch die Integration eines Umgebungslichtsensors in ein System von modular aufgebauten Meldegeräten kann der Sensor ebenfalls in die Fontplatte von Geräten oder Maschinen eingebaut werden. Er ist auf die gleiche Weise verkabel- und vernetzbar und kann so an optimalen Stellen die Umgebungslichthelligkeit erfassen. Bei der Montage kann man ihn behandeln wie seine benachbarten Befehls- und Meldegräte: zum Beispiel mit gleichem Montageloch, mit gleichem Buskabel und gleichem Design auf der Frontplatte.

Für die übergeordnete Bus-Steuerung und schließlich auch für den programmierenden Anwender ist dieser Sensor ein Funktionselement genau wie die Befehls- und Meldegeräte, nur mit einem zusätzlichen Parameter, der im Anwenderprogramm einfach verknüpft werden kann. Bei ausgedehnten Schaltwarten, Steuerpanels oder Leitwarten macht es Sinn, mehrere Umgebungslichtsensoren zu installieren, um zum Beispiel Lichtszenen zu erfassen.

Unter Verwendung einer Bus-Slave-Schaltung sind mehrere Befehls- und Meldegeräte an die Bus- und Versorgungsleitung anschließbar. Der Bus kann ein ASI-Bus sein. Die zentrale Bus-Steuerung wird so ausgestaltet, dass die Mess-Signale vom Umgebungslichtsensor verarbeitet werden und von dort die notwendigen Steuerdaten generiert werden. Der Anwender kann mit einem Anwenderprogramm zur Programmierung der zentralen Bus-Steuerung und der Elektronik-Schaltung (CHIP) im Umgebungslichtsensor auf die Verarbeitung und Weiterleitung der Mess-Daten des Sensorelements Einfluss nehmen. Die eingesetzte Soft- und Hardware (z.B. nichtflüchtiger Speicher, LED-Treiber) wird nach der Erfindung entsprechend aufbereitet.

Die Erfindung ist in mehreren, vorteilhaften Ausgestaltungen beschrieben, deren Merkmale einzeln oder in Kombination miteinander beansprucht sein können.

Die Steuersignale für Anzeigemittel - dort vornehmlich Leuchtdioden (LED oder OLED) - werden von der zentralen Bus-Steuerung (vornehmlich über einen 1-byte-Befehl) übermittelt und können unterschiedliche Lichtleistungsmuster an den aufgeschalteten Anzeigegeräten auslösen. Die Art eines Lichtleistungsmusters ist abhängig vom Mess- und Sendesignal des Umgebungslichtsensors und dem laufenden Anwenderprogramm in der zentralen Steuerung.

Die Lichtleistungsmuster sind in der elektronischen Schaltung eines der aufgeschalteten Anzeigegeräten vorab programmiert und werden von der zentralen Bus-Steuerung aktiviert. Als Lichtleistungsmuster werden in diesem Zusammenhang folgende Aktivitätszustände der Leuchtmittel verstanden: Dauerlicht unterschiedlicher Helligkeit und zeitliche Änderung der Lichtleistung, bestehend aus bestimmten periodischen oder unperiodischen Blinkfolgen (beispielsweise Blitzlicht oder Flackerlicht; ebenfalls mit unterschiedlicher Helligkeit).

Die Lichtleistungsmuster werden insbesondere durch Ansteuerung der Spannungsversorgung des optischen Anzeigemittels bestimmt.

Der Effekt beim Einsatz des Umgebungslichtsensors in einem Ensemble von mehreren an der Bus- und Versorgungsleitung angeschlossenen Befehls- und Meldegeräten ist, dass die Helligkeit von Anzeige- und Leuchtmitteln der Meldegeräte steuerbar ist. Damit kann die Erkennbarkeit der Anzeigen der jeweiligen Beleuchtungssituation (auch automatisch), beispielsweise von der Tageszeit abhängig, angepasst werden. Die gezielte Herabsetzung der Helligkeit (Dimmung der Lichtleistung auf Werte zwischen 0 und 100 % der Normalbetriebshelligkeit) kommt der Bedienerfreundlichkeit und Ergonomie (durch Vermeidung von Blendung) entgegen und hat zum anderen auch energiesparende Aspekte.

Auf der Rückseite des Umgebungslichtsensors kann ein optisches Anzeigemittel (LED oder OLED) zur Anzeige des Bus-Status vorhanden sein.

Ein vorgelagertes Frontmodul kann vorhanden sein, welches mit dem Umgebungslichtsensor verrastbar ausgebildet ist. Am Frontmodul können somit Befestigungsmittel zum lösbaren Einsetzen des Frontmoduls in eine Öffnung einer Schalttafel oder eines Schaltschranks vorhanden sein.

Das modulare Ensemble hat somit vornehmlich die Aufgabe der optischen Helligkeitserfassung und kann auf Frontplatten von Geräten oder Schaltkästen lösbar befestigt werden.

Der Umgebungslichtsensor kann zusätzlich mit einem Betätigungsstößel versehen sein, der von in dem Frontmodul vorhandenen Betätigungsmitteln beaufschlagbar ist.

Es sind elektrische Kontaktmittel auf einer Rückseite des Umgebungslichtsensors zum Kuppeln mit dem Bus-Kupplungsmodul vorhanden, wobei die Bus- und Versorgungsleitung mit Steck- oder Schneidkontakten zum Beispiel kontaktiert werden kann.

Im Umgebungslichtsensor können weiterhin Kontakte zum Kontaktieren eines auf einer Seitenfläche des Umgebungslichtsensors (Fläche liegt senkrecht zur Vorderseite) aufrastbaren Befehlsbausteins ausgebildet sein. In dieser ergänzenden Ausgestaltung sind zwei Kontaktstellen-Meldefunktionen realisierbar.

Die Erfindung wird in mehreren Figuren dargestellt, die jeweils im Einzelnen zeigen:
Fig. 1A und 1B: Außenseite und Innenseite eines Umgebungslichtsensors;
Fig. 2: eine weitere Darstellung einer Innenseite;
Fig. 3A und 3B: Darstellung eines Umgebungslichtsensors mit nach vorn ragender Halterung, und
Fig. 4: Umgebungslichtsensor in einem modular aufgebauten Meldegerät.

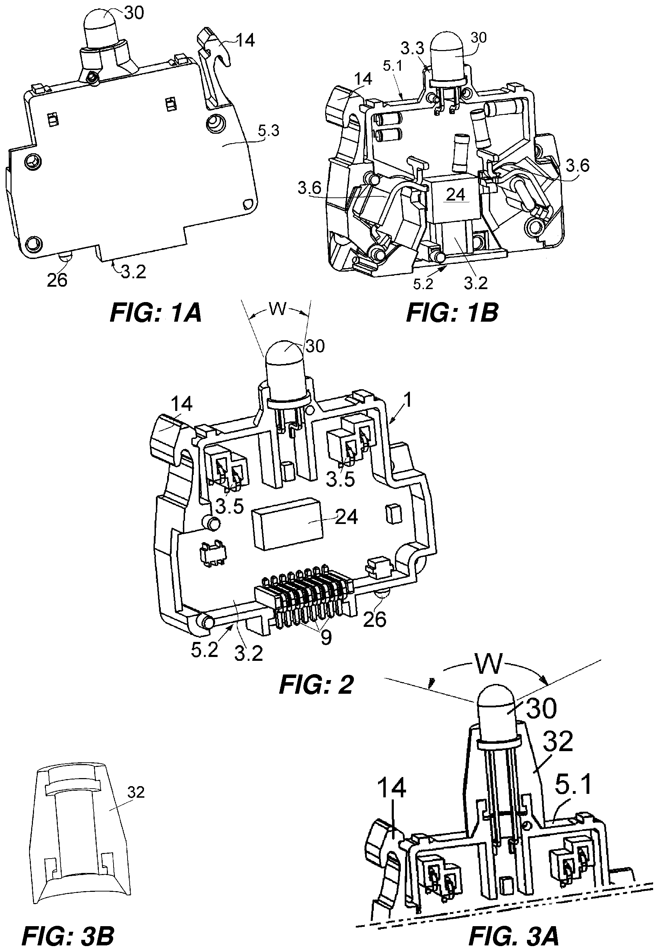

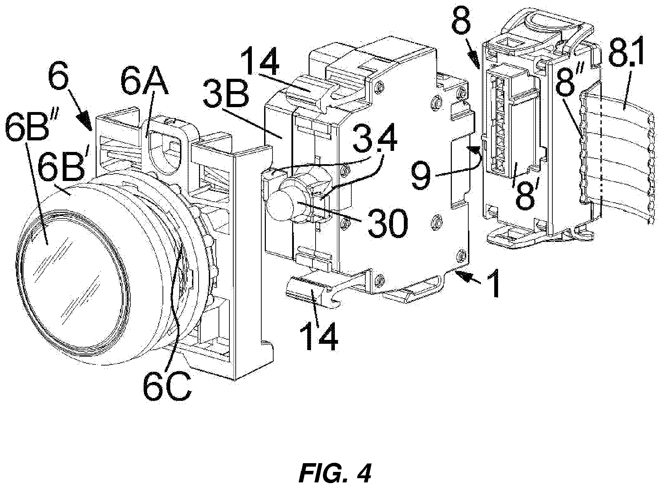

Die Figuren 1A, 1B und 2 zeigen Einzelheiten nur einer Gehäusehälfte 3.2 des Umgebungslichtsensors 1. In den Fig. 1B und 2 findet sich eine Darstellung des Inneren eines Umgebungslichtsensors 1. In der Darstellung in Fig. 1B sind die Busanschluss-Kontakte 9 nicht eingezeichnet. Diese sind jedoch in Fig. 2 zu sehen. Als Befestigungsmittel zwischen Umgebungslichtsensor und einem Frontmodul 6 (vgl. Fig. 4) sind in Richtung des Frontmoduls zeigende und die Vorderseite des Umgebungslichtsensors überragende Rasthaken 14 am Isolierstoff-Gehäuse 3.2 vorhanden. Auf der Vorderseite des Umgebungslichtsensors ist eine Aufnahmeöffnung 3.3 für das Lichtsensor-Element 30 (z.B. eine Fotodiode) vorhanden. Die Fig. 1B zeigt weiterhin zwei Seitenkontakte 3.6 als Klemmkontakte für elektrische Anschlüsse zu Bausteinen, die seitlich (parallel) aufgesteckt werden können.

Der Umgebungslichtsensor ist in einem flachprismatischem Gehäuse untergebracht. Das Gehäuse besteht aus zwei identischen Halbschalen 3.2. Die geometrische Gestaltung der Seitenflächen 5.2 ist etwa quadratisch oder hat Rechteck-Form. Die Vorderseite 5.1 und die Rückseite 5.2 sind relativ schmal.

In den Fig. 1B und 2 sind zum Teil Verdrahtung (Leiterbahnen) der elektrischen und optischen Elemente weggelassen. Dargestellt sind jedoch das Lichtsensor-Element 30, die Busanschluss-Kontakte 9 (zur Kontaktierung mit dem Bus-Kupplungsmodul 8) auf der Rückseite, die elektronische Schaltung (als CHIP 24) an der Gehäuseinnenwand und auf der Seitenfläche des Umgebungslichtsensors Kontakte 3.5 zur Kontaktierung eines aufrastbaren Parallel-Bausteins (vergleiche Kontaktbaustein 3B in Figur 4). Das Mess-Signal des Lichtsensor-Elements 30 kann auf einen Analogeingang des Chips verdrahtet sein und über Anpassung der Firmware des Chips auf die Bus- und Versorgungsleitung übermittelt werden.

Es ist auch möglich einen Umgebungslichtsensor zu verwenden, der schon eine Signalaufbereitung enthält und seine Daten dann digital über einen Port des Elektronik-Bausteins 24 meldet.

Unter Verwendung einer Bus-Slave-Schaltung sind mehrere Befehls- und Meldegeräte an die Bus- und Versorgungsleitung anschließbar. Der Bus kann ein ASI-Bus sein.

Die Fig. 1A bringt eine Darstellung einer Halbschale 3.2 eines Umgebungslichtsensors von außen. Sichtbar sind ein Rasthaken 14, das Lichtsensor-Element 30, ein optisches Anzeigemittel 26 zur Anzeige des Bus-Status auf der Rückseite 5.2 des Umgebungslichtsensors und (verdeckt) Steckkontakte 9 zum Kontaktieren mit der Steckbuchse 8' des Bus-Kupplungsmoduls 8.

In Fig. 3A ist (in einem teilweise gezeigten Vorderteil des Umgebungslichtsensors) ein nach vorn verlängerter Einbau des Lichtsensor-Elements 30 in die Gehäuseöffnung 3.3 dargestellt. In den Fig. 2 und 3A sind mit dem Bezugszeichen W zwei Öffnungs- oder Sichtwinkel eingezeichnet, aus dem das Licht auf das Lichtsensor-Element 30 fallen kann. Insbesondere bei Einbau in das in Fig. 4 gezeigte Ensemble von Anzeige- und Befehlsgeräten sollte darauf geachtet werden, dass der Erfassungswinkel W des Lichtsensor-Elements 30 ausreichend groß ist. Mit der Hülle 32 (in Fig. 3B im Schnitt gezeigt) kann der Sitz des Lichtsensor-Elements 30 um mehrere Millimeter nach vorn verlagert werden. Die Hülle 32 ist im wesentlichen zylindrisch, aus zwei Halbschalen bestehend, und ist passend in die Gehäuseöffnung 3.3 einsetzbar.

Die Fig. 4 zeigt ein modular aufgebautes Meldegerät, in dem der Umgebungslichtsensor integriert ist. Der Umgebungslichtsensor dient der Vernetzung und Signalisierung mit gemeinsam an der Bus- und Versorgungsleitung aufgeschalteten Befehls- und Meldegeräten. Gezeigt sind der Umgebungslichtsensor 1, ein Frontmodul 6, welches mit der Vorderseite 5.1 des Umgebungslichtsensors verrastbar ausgebildet ist und ein Bus-Kupplungsmodul 8. Das Frontmodul 6 hat einen Adapterrahmen 6A zur Verrastung mit dem Umgebungslichtsensor (vgl. Rastnasen 14 am Umgebungslichtsensor). In der Figur ist parallel zum Umgebungslichtsensor ein Befehls- oder Kontaktbaustein 3B gezeichnet, der ebenfalls in den Adapterrahmen 6A über in der Seitenfläche 5.3 vorhanden elektrische Kontakte 3.5 einrastet. Befehls- oder Kontaktbausteine haben ein Kontaktsystem, welches von einem Betätigungsstößel 3.4 aktivierbar ist. Mit einem solchen zweiten, parallelen Kontaktsystem kann eine zusätzliche Schaltstellung des Anzeigekopfes abgefragt und dem Elektronik-Baustein 24 im Lichtsensor-Elements 1 und der zentralen Bus-Steuerung gemeldet werden. In Fig. 4 ist am Umgebungslichtsensor und am Befehlsbaustein 3B ein Betätigungsstößel 3.4 gezeigt, womit zwei Kontaktstellen-Meldefunktionen realisierbar sind.

Am Frontmodul ist weiterhin ein Anzeigekopf 6A vorhanden mit einer transparenten Kappe 6B", durch die das Lichtsensor-Element die Helligkeit erfasst. Der Lichteintritt erfolgt von der Außenseite von Schaltkästen oder Schalttafeln, in deren Frontplatte das Frontmodul in einer Öffnung eingesetzt sein kann.

Auf einen Schaft 6C ist ein Ring 6B' aufgesetzt, der das Frontmodul nach Einführung (von hinten) in der Öffnung durch Verschraubung auf dem Schaft 6C sichert. Der Anzeigekopf ragt über den Schaft 6C aus der Frontplatte eines Schaltkastens oder einer Schalttafel heraus. Das innere zylindrische Teil des Schafts 6C kann als Druckknopf ausgebildet sein, der in Richtung auf den Befehlsbaustein 3B und seinen Betätigungsstößel 3.4 betätigbar ist. Mit diesem Aufbau hat das modulare Ensemble mit Umgebungslichtsensor die Funktion eines Schalters.

Auf der Rückseite 5.2 des Umgebungslichtsensors (liegt der das Sensor-Element 30 tragende Vorderseite 5.1 gegenüber) befinden sich Steckkontakte 9 (siehe Fig. 2) zum Kontaktieren mit der Steckbuchse 8' des Bus-Kupplungsmoduls 8, über den der Umgebungslichtsensor mit der Bus- und Versorgungsleitung 8.1 gekuppelt wird. Im Bus-Kupplungsmodul 8 sind Schneidkontakte 8" vorhanden, die in die Bus-Flachleitung 8.1 greifen, wodurch eine Spannungsversorgung (beispielsweise 16 V oder 24 V) zustande kommt und Mess-Signale vom Umgebungslichtsensor zur zentralen Bus-Steuerung übermittelt werden.

Im Umgebungslichtsensor sind - wie erwähnt - zu seiner Seitenfläche 5.3 orientierte elektrische Kontakte 3.5 ausgebildet. Mit diesen Kontakten wird mit einem seitlich aufgerastetem Befehlsbaustein 3B eine elektrische Verbindung hergestellt. Der Befehlsbaustein 3B trägt, wie der Umgebungslichtsensor in einer ergänzenden Ausgestaltung einen Betätigungsstößel 3.4. In der parallelen Anordnung von mit einem Betätigungsstößel ausgerüsteten Umgebungslichtsensor und dem Befehlsbaustein werden die Betätigungsstößel 3.4 in unterschiedlicher Tiefe zum Frontmodul 6 gelagert, so dass bei Betätigung durch den Druckknopf 6" im Frontmodul zwei Schaltstellungen im Anzeigekopf nach einander auslösbar sind. Die Kontaktgabe zu beiden Schaltstellungen wird in der elektronischen Schaltung 24 des Umgebungslichtsensors verarbeitet und an die zentrale Bus-Steuerung und zum Bussystem weitergegeben. Die Meldefunktion des Umgebungslichtsensors wird damit vorteilhaft erweitert.

### Bezugszeichen

- 1: Umgebungslichtsensor
- 3B: Befehls- oder Kontaktbaustein
- 3.2: Gehäuse-Halbschalen
- 3.3: Aufnahmeöffnung im Gehäuse
- 3.4: Betätigungsstößel (im Umgebungslichtsensor, im Befehlsbaustein)
- 3.5: Kontakte zu Parallel-Baustein
- 3.6: Seitenkontakte
- 5.1: Vorderseite
- 5.2: Rückseite
- 5.3: Seitenfläche
- 6: Frontmodul
- 6A: Adapterrahmen
- 6B: Anzeigekopf (auch Betätigungskopf)
- 6B': Ring
- 6B": transparenter Kappe
- 6C: Schaft zur Befestigung in Schalttafel-Öffnung
- 8: erstes Bus-Kupplungsmodul - als lose Ausführung
- 8': Steckbuchse am Bus-Kupplungsmodul
- 8": Anschluss-Kontakte (Schneidkontakte)
- 8.1: Bus- und Versorgungsleitung (beispielsweise mit 24 V)
- 9: Kontaktmittel (Stecker zur Steckbuchse am Bus- Kupplungsmodul)
- 14: Rasthaken für Frontbefestigung
- 24: Elektronik-Baustein (Chip)
- 26: Bus-Status-LED
- 30: Lichtsensor-Element, Fotodiode, Fotoelement
- 32: zylindrische (halsförmige) Hülle
- W: Sichtwinkel

## Patentansprüche

1. System von modular aufgebauten Anzeige- und Meldegeräten zur Vernetzung und Signalisierung mit gemeinsam an eine Bus- und Versorgungsleitung aufgeschalteten Anzeige- und Meldegeräten, umfassend:
- eine zentrale Bus-Steuerung,
- wobei mehrere der an die Bus- und Versorgungsleitung aufgeschalteten Anzeige- und Meldegeräte optische Anzeigemittel aufweisen,
- wobei mindestens eines der Anzeige- und Meldegeräte einen Umgebungslichtsensor (1) mit Isolierstoff-Gehäuse enthält, wobei der Umgebungslichtsensor (1) folgendes umfasst:
- ein auf einer Vorderseite (5.1) des Isolierstoff-Gehäuses und in einer Gehäuseöffnung (3.3) angeordnetes Lichtsensor-Element (30),
- elektrische Kontaktmittel (9) zum Kontaktieren mit der Bus- und Versorgungsleitung (8.1) auf einer Gehäuse-Rückseite (5.2) des Umgebungslichtsensors, und
- ein im Gehäuse (3.2) des Umgebungslichtsensors (1) gelagerter Elektronik-Baustein (24) zur Buskommunikation über die zentrale Bus-Steuerung mit den aufgeschalteten Anzeige- und Meldegeräten,
wobei der Elektronik-Baustein (24) und die zentrale Bus-Steuerung derart programmiert sind, dass in Abhängigkeit einer Umgebungshelligkeit von der zentralen Bus-Steuerung eine Lichtleistung der optischen Anzeigemittel von den mehreren an der Bus- und Versorgungsleitung (8.1) aufgeschalteten Anzeige- oder Meldegeräten gleichsinnig veränderbar ist.

2. System nach Anspruch 1, **dadurch gekennzeichnet, dass** in der Gehäuseöffnung (3.3) eine das Lichtsensor-Element (30) aufnehmende zylindrische Hülle (32) eingelegt ist.

3. System nach Anspruch 1 oder 2, **dadurch gekennzeichnet, dass** die elektrischen Kontaktmittel (9) als lösbare Kontakte zwischen dem Umgebungslichtsensor (1) und der Bus- und Versorgungsleitung (8.1) ausgebildet sind.

4. System nach einem der vorhergehenden Ansprüche, **dadurch gekennzeichnet, dass** das Isolierstoff-Gehäuse als prismatisches Gehäuse aus zwei identischen Halbschalen (3.2) gestaltet ist.

5. System nach einem der vorhergehenden Ansprüche, **dadurch gekennzeichnet, dass** ein optisches Anzeigemittel (26) zur Anzeige des Bus-Status auf der Gehäuse-Rückseite (5.2) des Umgebungslichtsensors (1) vorhanden ist.

6. System nach einem der vorhergehenden Ansprüche, **dadurch gekennzeichnet, dass** am Isolierstoff-Gehäuse (3.2) die Vorderseite (5.1) überragende, als Rasthaken (14) ausgebildete Befestigungsmittel vorhanden sind, mit welchen ein Frontmodul (6) befestigbar ist.

7. System nach einem der vorhergehenden Ansprüche, **dadurch gekennzeichnet, dass** im Umgebungslichtsensor (1) elektrische Kontakte (3.5) ausgebildet sind zum Kontaktieren eines auf einer Seitenfläche (5.3) des Umgebungslichtsensors an den Umgebungslichtsensor aufrastbaren Befehlsbausteins (3B).

8. System nach einem der vorhergehenden Ansprüche, **dadurch gekennzeichnet, dass** im Umgebungslichtsensor (1) elektrische Kontakte und ein zugehöriger, auf der Vorderseite (5.1) des Umgebungslichtsensor (1) hervorstehender Betätigungsstössel (3.4) vorhanden sind, wodurch Stellungen der elektrischen Kontakte bei Betätigungen der Kontakte über den Betätigungsstössel (3.4) an die zentrale Bus-Steuerung übermittelbar sind.

9. System nach einem der vorhergehenden Ansprüche, **dadurch gekennzeichnet, dass** dem Umgebungslichtsensor (1) über einen an einer Seitenfläche (5.3) des Umgebungslichtsensors (1) befestigten Befehlsbaustein (3B) Kontaktstellungen des Befehlsbausteins (3B) übermittelbar sind.

## Claims

1. System of modular display and signalling units for networking and signalling with display and signalling units connected jointly to a bus and supply line, comprising:
- a central bus controller,
- wherein a plurality of the display and signalling devices connected to the bus and supply line have optical display means,
- wherein at least one of the display and signalling units contains an ambient light sensor (1) with insulating material housing, wherein the ambient light sensor (1) comprises the following:
- a light sensor element (30) arranged on a front side (5.1) of the insulating material housing and in a housing opening (3.3),
- electric contact means (9) for contacting with the bus and supply line (8.1) on a housing rear side (5.2) of the ambient light sensor, and
- an electronic component (24) mounted in the housing (3.2) of the ambient light sensors (1) for bus communication via the central bus controller with the connected display and signalling units,
wherein the electric component (24) and the central bus controller are programmed such that as a function of ambient brightness a light output of the optical display means of the plurality of display or signalling units connected to the bus and supply line (8.1) can be changed in the same direction by the central bus controller.

2. System according to claim 1, **characterised in that** a cylindrical casing (32) accommodating the light sensor element (30) is inserted in the housing opening (3.3).

3. System according to claim 1 or 2, **characterised in that** the electric contact means (9) are designed as separable contacts between the ambient light sensor (1) and the bus and supply line (8.1).

4. System according to any of the preceding claims, **characterised in that** the insulating material housing is formed as a prismatic housing from two identical half shells (3.2).

5. System according to any of the preceding claims, **characterised in that** an optical display means (26) is provided for displaying the bus status on the housing rear side (5.2) of the ambient light sensor (1).

6. System according to any of the preceding claims, **characterised in that** fixing means designed as catching hooks (14) protruding over the front side (5.1) are provided on the insulating material housing (3.2), by means of which fixing means a front module (6) can be secured.

7. System according to any of the preceding claims, **characterised in that** in the ambient light sensor (1) electric contacts (3.5) are formed for contacting a command component (3B) fixable to the ambient light sensor on a side face (5.3) of the ambient light sensor.

8. System according to any of the preceding claims, **characterised in that** in the ambient light sensor (1) electric contacts and an associated activating tappet (3.4) protruding on the front side (5.1) of the ambient light sensor (1) are provided, wherein positions of the electric contacts can be transmitted to the central bus controller on activating the contacts via the activating tappet (3.4).

9. System according to any of the preceding claims, **characterised in that** contact positions of a command component (3B) can be transmitted to the ambient light sensor (1) via the command component (3B) fixed to a side face (5.3) of the ambient light sensor (1).

## Revendications

1. Système d'appareils indicateurs et de signalisation assemblés à structure modulaire destiné à l'interconnexion et la signalisation avec des appareils indicateurs et de signalisation connectés ensemble à une ligne de bus et d'alimentation, comprenant :
- une gestion centrale de bus,
- plusieurs des appareils indicateurs et de signalisation connectés à la ligne de bus et d'alimentation comportant des moyens d'affichage optiques,
- au moins l'un des appareils indicateurs et de signalisation comportant un capteur de lumière d'ambiance (1) avec boîtier-isolant, le capteur de lumière d'ambiance (1) comprenant ce qui suit :
- un élément capteur de lumière (30) disposé sur une face avant (5.1) du boîtier-isolant et dans une ouverture (3.3) du boîtier,
- des moyens de contact électrique (9) destinés à l'établissement de contacts avec la ligne de bus et d'alimentation (8.1) sur une face arrière (5.2) du boîtier du capteur de lumière d'ambiance, et
- un composant électronique (24) logé dans le boîtier (3.2) du capteur de lumière d'ambiance (1), destiné à la communication par bus via la gestion centrale de bus avec les appareils indicateurs et de signalisation connectés,
dans lequel le composant électronique (24) et la gestion centrale de bus sont programmés de telle façon qu'en fonction d'une luminosité ambiante une puissance lumineuse des moyens d'affichage optiques des plusieurs appareils indicateurs ou de signalisation connectés à la ligne de bus et d'alimentation (8.1) est variable dans le même sens par la gestion centrale de bus.

2. Système selon la revendication 1, **caractérisé en ce qu'**une enveloppe cylindrique (32) recevant l'élément capteur de lumière (30) est insérée dans l'ouverture (3.3) du boîtier.

3. Système selon la revendication 1 ou 2, **caractérisé en ce que** les moyens de contact électrique (9) sont réalisés en tant que contacts amovibles entre le capteur de lumière d'ambiance (1) et la ligne de bus et d'alimentation (8.1).

4. Système selon l'une quelconque des revendications précédentes, **caractérisé en ce que** le boîtier isolant est formé en tant que boîtier prismatique constitué de deux demi-coques (3.2) identiques.

5. Système selon l'une quelconque des revendications précédentes, **caractérisé en ce qu'**un moyen d'affichage optique (26) est présent sur la face arrière (5.2) du boîtier du capteur de lumière d'ambiance (1) pour l'affichage du statut du bus.

6. Système selon l'une quelconque des revendications précédentes, **caractérisé en ce que** sur le boîtier isolant (3.2) sont présents des moyens de fixation configurés sous forme de crochets de blocage (14) faisant saillie de la face avant (5.1), à l'aide desquels un module avant (6) peut être fixé.

7. Système selon l'une quelconque des revendications précédentes, **caractérisé en ce que** des contacts électriques (3.5) sont formés dans le capteur de lumière ambiante (1) pour l'établissement de contacts d'un composant de commande (3B) pouvant être fixé par encliquetage au capteur de lumière d'ambiance sur une face latérale (5.3) du capteur de lumière d'ambiance.

8. Système selon l'une quelconque des revendications précédentes, **caractérisé en ce que** des contacts électriques et un poussoir d'actionnement (3.4) correspondant faisant saillie sur la face avant (5.1) du capteur de lumière d'ambiance (1) sont présents dans le capteur de lumière d'ambiance (1), de sorte que lors d'actionnements des contacts des positions des contacts électriques peuvent être transmises par le poussoir d'actionnement (3.4) à la gestion centrale du bus.

9. Système selon l'une quelconque des revendications précédentes, **caractérisé en ce que** des positions de contact d'un composant de commande (3B) peuvent être transmises au capteur de lumière d'ambiance (1) par le composant de commande (3B) fixé sur une face latérale (5.3) du capteur de lumière d'ambiance (1).
